# EUROPÄISCHE PATENTANMELDUNG

(11) **EP 4 464 158 A1**
(43) Veröffentlichungstag der Anmeldung: **20.11.2024**
(21) Anmeldenummer: 24174238.6
(22) Anmeldetag: 04.05.2024
(51) Int. Cl.: A01M 31/00

(54) **FALLE FÜR WILDTIERE UND EIN VERFAHREN ZUM BETRIEB EINER FALLE**

(30) Priorität: 12.05.2023 DE 202023102616 U; 29.05.2023 DE 202023102950 U
(71) Anmelder: Attratec GmbH, 63820 Elsenfeld (DE)
(72) Erfinder: Schnabel, Dr. Gerhard, 63820 Elsenfeld (DE)
(74) Vertreter: Baumann, Rüdiger Walter

(57) **Zusammenfassung**

Die Erfindung betrifft eine Falle (1) für Wildtiere, insbesondere automatische oder mechanische Falle, umfassend: ein Gehäuse (10) mit einem Fallenraum (2), der mindestens eine Zutrittsöffnung (11a, 11b), welche verschließbar ist aufweist, wenigstens zwei Kameras (15a, 15b) mit automatischer Bilder- oder / und Videoerfassung; einen Auslösemechanismus für die Falle, ein Kommunikations- und Steuerungssystem zur Übermittlung von Bild- und/oder Videodaten und zum Empfang von Steuerungsbefehlen, optional mit einem Alarmierungssystem (17), das in der Lage ist, einen Benutzer zu alarmieren, wenn ein Tier gefangen ist, und eine Energiequelle zur Versorgung der Falle (1) mit Energie, wobei die Kameras in unterschiedlichen Winkeln oder an unterschiedlichen Stellen, bevorzugt an einer ersten Seite (3) und einer der ersten Seite (3) gegenüberliegenden zweiten Seite (4) im oder am Fallenraum (2) angeordnet sind und einen den gesamten Fallenraum (2) erfassenden Bildaufzeichnungsbereich aufweisen sowie ein Verfahren zum Betrieb einer solchen Falle.

## Beschreibung

Die Erfindung betrifft eine Falle für Wildtiere und ein Verfahren zum Betrieb einer solchen Falle.

Herkömmliche Fallen, die zur Jagd auf Tiere wie beispielsweise Wildtiere oder Schadtiere verwendet werden, erfordern menschliches Eingreifen zur Bedienung und Überwachung, was zeitaufwändig und ineffizient sein kann. Bekannt sind sog. Fallenmelder, die an der Falle angebracht werden und den Fang bestätigen. Fallenmelder melden jedoch nur ein Schließen von Fallen, können aber weder anzeigen, ob es sich um eine Fehlauslösung, einen Fang oder einen Fehlfang handelt. In Bezug auf den Tierschutz haben herkömmliche Fallen bereits gute Fortschritte erzielt, allerdings muss der Tierschutzaspekt weiter verbessert werden: Zum einen sind herkömmliche Fallen wenig selektiv, d.h. sie können nur sehr begrenzt oder gar nicht zwischen verschiedenen Tierarten wie Zieltierarten und Nichtzieltierarten unterscheiden. Zum anderen können selbst Fallen mit einer fernmeldebasierten Bildübertragung oft nicht sofort zu einer zweifelsfreien Identifizierung gefangener Tiere führen. Nachteilig an herkömmlichen Fallen ist, dass die benutzte Kamera nachts keine Bilder bzw. Filme mit guter Qualität aufnehmen kann. Zum anderen können sich gefangene Tiere direkt vor der Kameralinse befinden, wodurch die zweifelsfreie Identifizierung des gefangenen Tieres nahezu unmöglich ist. Dabei ist eine sichere Identifizierung durch Bild- bzw. Filmübertragung eine Voraussetzung dafür, um Fallen unter Tierschutzgesichtspunkten optimal betreiben zu können.

Aufgabe der vorliegenden Erfindung ist es eine bessere Identifizierung von in Fallen gefangenen Tiere vornehmen und die selektive Behandlung der gefangenen Tiere verbessern zu können.

Diese Aufgabe wird gelöst durch eine Falle mit den Merkmalen des Anspruchs 1 und ein Verfahren zum Betrieb einer Falle mit den Merkmalen des Anspruchs 13. Vorteilhafte Weiterbildungen der Erfindung sind Gegenstand der abhängigen Ansprüche.

Die vorliegende Erfindung beschreibt Fallen für Wildtiere, insbesondere zur Erfassung von Tieren in natürlichen Lebensräumen oder in landwirtschaftlichen oder städtischen Gebieten, die die Beschränkungen herkömmlicher und bestehender automatischer Fallensysteme überwinden.

Die Erfindung schlägt eine Falle für Wildtiere, insbesondere eine automatische oder mechanische Falle vor, die ein Gehäuse mit einem Fallenraum aufweist, der über mindestens eine verschließbare Zutrittsöffnung verfügt. Der Verschluss der Zutrittsöffnung kann, ohne die Erfindung hierauf zu beschränken, mittels einer Klappe, einer Fallentür, eines Riegels oder in sonstiger geeigneter Weise erfolgen, um ein Flüchten des gefangenen Tieres zu verhindern. Die Falle weist wenigstens zwei Kameras auf, die in der Lage sind automatisch, d.h. selbstauslösend Bild- und/oder Videoaufnahmen des Fallenraumes und eines dort gefangenen Tieres zu erstellen. Die Bild- und/oder Videoaufnahmen können dabei selbstausgelöst durch die Kameras bzw. den Kameras beigegebene oder in die Kameras integrierte Sensoren, wie beispielsweise PIR- oder sonstige Bewegungssensoren erfolgen. Ebenfalls umfasst ist, dass die Bild- und/oder Videoaufnahmen zusätzlich oder alternativ bevorzugt fernbedient durch einen Nutzer ausgelöst werden, sobald dieser die Mitteilung bzw. ein Signal erhält, das ein Tier in der Falle gefangen wurde. Diese Ausgestaltung gibt dem Nutzer die Möglichkeit jederzeit weitere Bilder von dem in der Falle gefangenen Tier aufzunehmen, um diese weiter zu analysieren bzw. die ursprünglichen von der Kamera selbstausgelöst aufgenommenen Bilder zu verifizieren. Dies erlaubt die sichere und zweifelsfreie Identifikation des gefangenen Tieres aus der Ferne und kann im Fall eines Fehlfanges, d.h. bei Fang eines Individuums einer Tierart, die nicht die Zieltierart für den Fallenfang ist, zu einem schnellen Freilassen aus der Falle, beispielsweise durch fernbedientes Öffnen der Falle führen. Die Falle umfasst ferner einen Auslösemechanismus für das Verschließen der Falle, insbesondere durch die vorgenannte verschließbare Zutrittsöffnung, der in der Lage ist, die Falle als Reaktion auf die Erfassung eines Tieres durch die beiden Kameras oder eine sonstige Erfassungsvorrichtung, wie beispielsweise Sensoren, wie PIR-Sonsoren oder eine mechanische Auslösungsvorrichtung wie z.B. eine Wippe oder ein Schalterautomatisch auszulösen, d.h. zu schließen. Daneben besteht auch die Möglichkeit, dass der Auslösemechanismus so konfiguriert ist, dass dieser erst dann fernbedient ausgelöst wird, wenn das sich in der Falle aufhaltende Tier vom Nutzer, insbesondere aus der Ferne, als Zieltier bzw. zu einer oder mehreren Zieltierarten zugehörig, über die Bild- oder Videoaufnahmen identifiziert wurde. Des Weiteren ist ein Kommunikations- und Steuerungssystem vorgesehen, das die Weitergabe der in der Falle erfassten Daten, insbesondere der Bild- oder Videodaten über eine im Kommunikations- und Steuerungssystem vorgesehene Sendeeinheit an den Nutzer und die Umsetzung von über eine ebenfalls im Kommunikations- und Steuerungssystem vorgesehene Empfangseinheit vom Nutzer empfangenen Steuerbefehlen durchführt. Das Kommunikations- und Steuerungssystem kann auch ein Alarmierungssystem beinhalten, das in der Lage ist, einen Benutzer insbesondere automatisch zu alarmieren, wenn ein Tier gefangen wurde bzw. sich im Fallenraum aufhält. Die Falle umfasst auch eine Energiequelle zur Versorgung der Falle bzw. der Fallenelemente wie Auslösemechanismus, Verschlussvorrichtung, Kameras und Sensorik, Alarmierungssystem, sowie die Elemente des Kommunikations- und Steuerungssystems (Sendeeinheit, Empfangseinhiet, Steuereinheit) mit Energie. Als Energiequelle kommt je nach Aufstell- und Einsatzort der Falle beispielsweise eine Batterie, eine Photovoltaikeinrichtung, ein insbesondere wiederaufladbarer Stromspeicher bevorzugt in Verbindung mit einer Photovoltaikanlage oder der Anschluss an ein Stromnetz in Frage. Bevorzugt sind wiederaufladbare Stromspeicher -. Die Kameras sind in unterschiedlichen Winkeln oder an unterschiedlichen Stellen, bevorzugt an einer ersten Seite und einer der ersten Seite gegenüberliegenden zweiten Seite im oder am Fallenraum angeordnet und weisen einen den gesamten Fallenraum erfassenden Bildaufzeichnungsbereich auf.

Als vorteilhaft erweist sich, die Anordnung von zwei Kameras in der Falle bzw. im Fallenraum. Diese erlauben eine zweifelsfreie Identifizierung des Tieres, da Bild- oder Videoaufnahmen aus mehreren Perspektiven erstellt bzw. aufgenommen werden können. Selbst im Fall, dass sich ein Tier derart vor der ersten Kamera positioniert hat, dass das Objektiv verdeckt ist oder die Kamera nur einen Ausschnitt des Tieres aufnehmen kann, wird durch die zweite Kamera eine Bild- oder Videoaufnahme aus einer zweiten Perspektive aufgenommen. Dadurch werden weitere Details des Tieres sichtbar, die die zweifelsfreie Identifizierung des Tieres und die Ableitung von Handlungsoptionen ermöglichen. Anhand der Bild- und Videoaufnahmen bzw. deren Auswertung (automatisch oder durch den Nutzer) kann dann die sofortige Freilassung des Tieres, der Verbleib des Tieres in der Falle bis zum Eingriff des Nutzers oder die sofortige Tötung des Tieres in der Falle nach Empfang entsprechender Steuerungsbefehle des Nutzers durchgeführt werden. Im Fall, dass keine automatische, d.h. bild- oder sensorgestützte, sondern eine fernbediente Auslösung bzw. der Verschluss der Falle vorgesehen ist, kann der Nutzer nach Auswertung der verschiedenen Aufnahmen über die Auslösung der Falle entscheiden.

Ein Vorteil der vorliegenden Erfindung ist es also, dass die Identifizierung gefangener Tiere durch zwei im Fallenraum angeordnete Kameras zu jeder Tageszeit, d.h. über 24 Stunden hinweg, möglich ist. So kann klar ermittelt werden, ob es sich um einen (gewünschten) Fang eines Zieltiers, einen Fehlfang oder eine Fehlauslösung der Falle ohne Fang handelt. Die Ausführungsformen der Erfindung zeigen auf, wie zweifelsfrei zwischen Fang, Fehlfang und Fehlauslösung bei Tag und Nacht ohne Zeitverzug unterschieden werden kann und dass durch den automatischen bzw. autonomen oder teilautomatischen Betrieb der Falle sowohl Effizienz als auch Tierschutzaspekte optimiert werden.

Bevorzugt werden zwei Kameras eingesetzt, die Bilder bzw. Filme mit ausreichender Qualität sowohl tags als auch nachts aufnehmen und senden können und die über einen geeigneten Auslösemechanismus für die Bild- oder Videoerfassung verfügen und optional auch über eine App steuerbar sind. Ebenfalls bevorzugt sind Kameras, die mit einer Bilderkennungstechnologie, insbesondere als Laser-, Wärmebild- oder Nachtsichtkameras, bevorzugt hochauflösende Kameras oder Kombinationen daraus, ausgebildet sind.

Als vorteilhaft wird angesehenen, wenn die beiden Kameras in unterschiedlichen Winkeln oder an unterschiedlichen Stellen im oder am Fallenraum angeordnet. Als besonders vorteilhaft erweist sich dabei die Anordnung wenigstens einer Kamera jeweils an einem ersten und einer zweiten Seite des Fallenraumes, wobei die Kameras einen den gesamten Fallenraum erfassenden Bild- oder Videoerfassungsbereich bzw. Bild- oder Videoaufzeichnungsbereich aufweisen. Als günstig wird angesehen, wenn sich die Bildebenen zumindest teilweise überschneiden. Dies hat den Vorteil, dass eine Erfassung des Tieres aus mehreren Perspektiven bzw. in mehreren Ausschnitten möglich ist und die Zusammenschau der aufgezeichneten Bild- oder Videoaufnahmen eine zweifelsfreie Identifizierung des Tieres bzw. der Tierart ermöglicht, als dies mit nur einer Kamera möglich wäre. Die Qualität der Erkennung des Tieres wird somit wesentlich verbessert, die nachfolgend die qualifizierte Ableitung von Handlungsmöglichkeiten erlaubt. Dies selbst dann, wenn eine der Kameras durch das in die Falle eingetretene Tier ganz oder teilweise verdeckt wird.

Die vorliegende Erfindung betrifft also eine Falle mit mindestens zwei im oder am Fallenraum angeordneten sendefähige Kamera, die sowohl tags als auch nachts Bilder und optional auch Filme mit ausreichender Qualität aufnehmen und senden können und die mit einem geeigneten Sensor wie zum Beispiel einem PIR-Sensor, ausgestattet ist. Aufnahmen bei Nacht können zum Beispiel durch Verwendung von IR-Lichtquellen oder auch Lichtquellen ermöglicht werden. Eine andere Möglichkeit besteht darin, eine oder mehrere Wärmebildkameras zu verwenden. Ein Auslösen und Senden von Fotos bzw. Filmen erfolgt direkt nach dem Fang oder bei fernbedienter Aktivierung der Kameras durch einen Nutzer. Selbstverständlich besteht auch die Möglichkeit, dass die Kamera zunächst selbstständig Bild- oder Videoaufnahmen an den Nutzer sendet und dieser sich dann auf die Kameras aufschaltet, um eine Verifizierung bzw. weitere Identifizierung des Tieres durch zusätzliche Aufnahmen oder eine Liveansicht durchzuführen. Die Kameras können auch so eingestellt werden, dass sie auch nach dem Fang weitere Foto- bzw. Filmaufnahmen machen und senden. In einer Weiterbildung der Erfindung ist vorgesehen, dass die Bild- bzw. Videoerfassung durch beide Kameras zeitgleich erfolgt. Ebenfalls umfasst ist, dass beide Kameras Aufnahmen mit einem zeitlichen Versatz aufnehmen. Dies hat den Vorteil, dass das Tier erfasst wird, sobald es die Falle betritt und eine weitere Aufnahme erst dann erstellt wird, wenn sich das Tier vollständig in der Falle befindet. In einer bevorzugten Ausführungsform kann die Kamera auch zeitgesteuert ausgelöst werden, z.B. einmal, zweimal oder mehrmals am Tag oder aber in definierten Tages- oder Wochenabständen, zur Kontrolle der Falle: dann wird z.B. einmal, zweimal oder mehrmals am Tag ein Foto zur Kontrolle der Falle an den Nutzer geschickt. Eine eindeutige Unterscheidung zwischen Fang bzw. Fehlfang auf der einen Seite und Fehlauslösung auf der anderen Seite ist mit der erfindungsgemäßen Falle möglich. Die Übertragung von Fotos kann z.B. über 2G-, 4G-, 5G- und die die Übertragung von Filmen über 4G- und 5G-Netze erfolgen, ohne jedoch die Erfindung hierauf zu beschränken.

Die Falle kann als mechanische Falle oder automatische Falle ausgebildet sein.

Beispiele für mechanische Fallen sind dem Fachmann bekannte Fallen wie z.B. Betonrohrfallen, Drahtkastenfallen, bevorzugt mit Abdeckplanen zum Abdunkeln, Kofferfallen und Kastenfallen, ohne jedoch die Erfindung hierauf zu beschränken. Eine Automatische Falle im Sinne dieser Erfindung ist dadurch gekennzeichnet, dass sie ferngesteuert deaktiviert und aktiviert werden kann, und dass mindestens eine Klappe im Falle eines Fehlfanges geöffnet und das gefangene Tier freigelassen werden kann.

Erfindungsgemäße Fallen können verschiedene Größen haben und sich zum Fang von Wildtieren unterschiedlichster Größe eignen.

Ein bevorzugt Ausführungsform besteht in erfindungsgemäßen Fallen zum Fangen von Nagetieren wie z.B. Mäuse, Ratten und Nutria.

Eine weitere bevorzugte Ausführungsform besteht in erfindungsgemäßen Fallen, die sich zum Fangen von kleinen und mittleren Prädatoren eigenen, wie z.B. Marder, Iltis, Wiesel, Dachs, Fuchs, Enok und Waschbär.

Bevorzugt handelt es sich bei den erfindungsgemäßen Fallen um Lebendfallen.

Eine bevorzugte Ausführungsform besteht darin, dass es sich um eine Falle handelt, die zwei sendefähige Kameras umfasst, und die jeweils an den Enden der Falle bzw. gegenüber angeordnet sind und in das Innere der Falle gerichtet sind. So kann eindeutig und ohne Zeitverzug zwischen den drei Fällen Fang, Fehlfang und Fehlauslösung unterschieden werden.

In einer bevorzugten Weiterbildung weist die Falle zusätzliche Sensoren auf. Hierbei handelt es sich insbesondere um Infrarotsensoren, Passiv-Infrarot-Sensoren (PIR-Sensoren), Bewegungssensoren, Wärmesensoren oder Kombinationen daraus

Um mit der gleichen Falle verschiedene Tiere und Tierarten mit unterschiedlicher Größe detektieren und fangen zu können, sind die Kameras und/oder die optionalen Erfassungsmittel, wie Sensoren,in einer Weiterbildung der Falle an einer im oder am Gehäuse angeordneten Höhenverstellungsvorrichtung angeordnet. Die Höhenverstellungsvorrichtung ist dabei bevorzugt mechanisch, elektronisch oder fernbedienbar verstellbar.

In einer als günstig angesehene Ausführungsformen weisen die Kameras einen einstellbaren Bild- oder Videoerfassungsbereich bevorzugt bezüglich Erfassungswinkel und/oder abgedecktem dreidimensionalem Erfassungsraum, und die Sensoren einen einstellbaren Detektionsbereich auf. Möglich ist auch die zusätzliche oder alternative Anordnung von wenigsten einer insbesondere höhenverstellbaren Lichtschranke oder einen oder mehr höhenverstellbare Bewegungssensor(en), durch die eine Bild- oder Videoerfassung oder Sensordetektion aktiviert wird, sobald ein Tier die Lichtschranke durchschreitet.

Ein in der Falle vorgesehener Wärmesensor erfasst bevorzugt die Temperatur in der Falle und/oder eine Temperaturänderung kontinuierlich oder in definierten Intervallen. So kann der Wärmesensor als erstes Detektionsmittel für die Anwesenheit oder Abwesenheit eines Tieres in der Falle verwendet werden, insbesondere bevor eine weitergehende Detektion über die sonstigen Erfassungsmittel oder die Bild- oder Videoaufnahme durch die Kameras erfolgt, beziehungsweise ausgelöst wird.

Die Falle umfasst in einer vorteilhaften Weiterbildung zusätzlich ein Mittel zur Aufnahme von Tonsignalen an oder in der Falle. Das automatische Alarmierungssystem oder das Kommunikationssystem ist dabei zur Übermittlung von Tonsignalen ausgerüstet.

Als günstig wird angesehen, wenn im Fallenraum eine Lichtquelle angeordnet ist, die bevorzugt durch wenigstens eine der Kameras oder einen Sensor aktivier- bzw. steuerbar, das heißt aus- oder einschaltbar ist. Die Qualität der über die Kameras erfassten Bilder kann hierdurch wesentlich verbessert werden.

Dem Auslösemechanismus ist bevorzugt wenigstens ein Aktor zugeordnet, der eingerichtet ist, die Arretierung des Fallenverschlusses, d.h. insbesondere der Klappe oder der Fallentür zu lösen und in eine Schließstellung zu überführen und/oder den Fallenverschluss, insbesondere die Klappe oder Fallentür in eine Offenstellung zurückzuführen und zu arretieren.

Die Falle umfasst in einer vorteilhaften Weiterbildung eine Ausgangsöffnung, die mittels einer Ausgangstür oder Ausgangsklappe verschlossen ist. Der Auslösemechanismus ist mit einem weiteren Aktor wirkverbunden, der die Ausgangstür oder Ausgangsklappe automatisch, insbesondere fernbedienbar in die Offenstellung überführt, in welcher die Ausgangsöffnung freigegeben ist. Bei Fehlfängen kann somit in einfacher Art und Weise das in der Falle gefangene Tier freigelassen werden, ohne dass ein Nutzer die Falle aufsuchen muss.

Die automatische Falle ist erfindungsgemäß mit einem automatischen Alarmierungssystem ausgestattet, das ein Kommunikationsmittel umfasst, welches auf ein Mobilfunknetzwerk, ein Satellitennetzwerk oder ein drahtloses Netzwerk zugreift, um den Nutzer zu alarmieren und/oder Daten an einen entfernten Server oder ein mobiles Gerät zu übertragen. Es ist auch ein Fernüberwachungsmittel vorhanden, mit dem der Zustand der Falle und des gefangenen Tieres überwacht werden kann. Der Nutzer kann hieraus dann die Informationen entnehmen, dass die Falle innerhalb eines bestimmten, unter Tierschutzgesichtspunkten relevanten Zeitraums, aufgesucht und das dort gefangene Tier aus der Falle entnommen werden muss. Zusätzlich kann auch eine Erinnerungsfunktion vorgesehen werden, die den Nutzer an den Ablauf des obigen Zeitraums erinnert. Die Falle kann dabei bevorzugt auch derart ausgebildet sein, dass bei Ablauf des vorgenannten Zeitraums eine selbstständige Freilassung des gefangenen Tieres erfolgt, wenn der Nutzer die Falle nicht aufgesucht hat. Das vorgenannte Kommunikationssystem kann auch eine aktive Kommunikation des Nutzers mit der Falle ermöglichen, d.h. insbesondere die Fernbedienung der Kameras ermöglichen. Dies ist insbesondere dann wünschenswert, wenn der Nutzer eine weitergehende Identifizierung des in der Falle befindlichen Tiers durchführen möchte und sich hierzu aktiv und fernbedient der Kameras in der Falle bedient. Das Kommunikationssystem dient dann zum Empfang entsprechender Steuerbefehle des Nutzers, um die Live-Bedienung der Kameras durch den Nutzer zu ermöglichen.

Das automatische Alarmierungssystem ist in der Lage, einen akustischen oder visuellen Alarm insbesondere als Text- oder E-Mail-Benachrichtigung oder eine Kombination davon auszugeben und ist eingerichtet, um erfasste Sensor- und/oder Bilddaten an den Nutzer zu senden. Der Nutzer der Falle kann somit den Fallenzustand überwachen und entscheiden, ob die Falle aufgesucht werden muss, um das gefangene Tier aus dieser zu entnehmen oder ob eine automatische Öffnung der Falle erfolgen soll, weil das Tier, das gefangen wurde, nicht der gewünschten Zieltierart angehört. Das Kommunikationssystem dient dann zum Empfang entsprechender Steuerbefehle des Nutzers.

Als vorteilhaft wird angesehen, wenn wie in einer weiteren Ausführungsformen vorgesehen, der Falle eine erste Dispensiervorrichtung zur Abgabe von festen oder flüssigen Futtermitteln und/oder festen, flüssigen oder gasförmigen Lockmitteln zugeordnet ist. Die Abgabe der Futter- und/oder Lockmittel erfolgt dabei bevorzugt in das Gehäuse und/oder in ein Gehäuseumfeld. Kommt es zu Fehlfängen, die z.B. automatisch oder fernbedient freigelassen werden, kann die Falle fernbedient mit neuem Futter beziehungsweise Lockmitteln bestückt und wieder fängisch gestellt werden, ohne dass der Nutzer die Falle aufsuchen muss. Bei einer vollständig automatisch betriebenen Falle, das heißt, Erkennung des gefangenen Tieres und Entscheidung über das Belassen in der Falle oder das Freilassen dieses Tieres wird automatisiert durchgeführt, kann auch das Futter oder Lockmittel automatisiert dispensiert werden beziehungsweise nach dem Freilassen aufgefüllt werden. Die erste Dispensiervorrichtung ist bevorzugt im oder am Gehäuse angeordnet.

Optional kann im oder am Gehäuse auch eine zweite Dispensiervorrichtung zur Abgabe von letalen oder betäubenden Substanzen, insbesondere in gasförmiger, fester oder flüssiger Form, vorgesehen sein. Diese Ausführungsformen zielt besonders darauf, dass mit der Falle Schadorganismen wie Ratten oder Mäuse gefangen werden, die unmittelbar nach dem Fang betäubt oder getötet werden sollen. Selbstverständlich kann auch nur eine Dispensiervorrichtung vorgesehen werden, die eingerichtet ist, um bedarfsabhängig Futter- und/oder Lockmittel oder letalen und/oder betäubenden Substanzen abzugeben.

Die Falle umfasst in einer weiteren vorteilhaften Weiterbildung eine Vorrichtung zur Abgabe von ackustischen Tönen / Signalen. So können Zieltierarten z.B. angelockt und ggf. Nichtzieltierarten vom Betreten der Falle abgehalten oder vergrämt werden. Die Abgabe der Töne / Signale kann z.B. über die vorhandenen Kommunikationssysteme manuell vom Nutzer fernausgelöst oder über ein Programm regelmäßig, d.h. in definierten oder vom Nutzer definierbaren Zeitintervallen ausgelöst durchgeführt werden.

Das Gehäuse der Falle besteht aus insbesondere lichtundurchlässigen Materialien wie Metall, Kunststoff, Beton, Holz oder einer Kombination davon. Das Gehäuse ist bevorzugt wasserdicht ausgebildet, sodass die Falle auch für die Jagd im oder unter Wasser eingesetzt werden kann.

Das Gehäuse kann bevorzugt größenverstellbar sein und kann schieb- oder steckbare Einrichtungen zur Veränderung der Gehäusegröße, insbesondere der Gehäusebreite, -höhe oder -länge aufweisen. Hierdurch kann ein und dieselbe Falle für den Fang verschiedener Tiere bzw. Tierarten verwendet werden, ohne dass für jede Tierart eine eigene Falle bzw. Fallengröße vorgehalten werden muss.

Als vorteilhaft erweist es sich in diesem Zusammenhang, wenn durch die Größenverstellbarkeit die Falle für den selektiven Fang bestimmter Tierarten, wie Kleintieren, insbesondere Nagetiere, bevorzugt Ratten und Mäuse, oder größerer Tiere, wie Raubwild, Bisamratten, Biber ausgelegt werden kann.

Eine als günstig angesehene Weiterbildung der erfindungsgemäßen Falle sieht vor, dass die Ausgangsöffnung der Falle mit einem insbesondere nachgeordneten, entnehmbaren Gebinde, wie einem Korb, einer Tasche oder einer Kiste, verbunden ist, in das ein in der Falle gefangenes Tier durch die Ausgangstür oder Ausgangsklappe austreten kann, nachdem die Ausgangstür oder Ausgangsklappe bevorzugt automatisch geöffnet wurde. Die Falle kann so erneut fängisch gestellt werden, während das erste bereits gefangene Tier in dem entnehmbaren Gewinde aufgenommen wurde und dort verbleibt, bis der Nutzer der Falle diese aufsucht und das Tier entnimmt. Bevorzugt ist die Ausgangsöffnung nach Eintritt des Tiers in das Gebinde automatisch oder fernbedient wiederverschließbar. In einer vorteilhaften Weiterbildung kann im Gebinde wenigstens ein zusätzliches Erfassungsmittel, wie eine weitere Kamera, zur Erfassung des in das Gebinde eingetretenen Tieres vorgesehen sein, um die Überwachung oder Bestimmung des gefangenen Tieres zu ermöglichen. Die Erfindung umfasst auch ein Verfahren zum Betrieb der zuvor beschriebenen Falle, umfassend die Schritte: Erfassen des Eintritts eines Tieres in den Fallenraum anhand von Sensor- oder Kameradaten, Auslösen der Falle und Verschließen der Zutrittsöffnung, automatische Aufnahme von Bildern und/oder Videos des gefangenen Tieres bevorzugt aus zwei Perspektiven durch die Kameras und optionale Erfassung von fallen- oder tierbezogenen Sensordaten; Weiterleitung der erfassten Sensor- und/oder Bilddaten an den Nutzer über das Kommunikations- und Steuerungssystem, das auf ein Mobilfunknetzwerk, ein Satellitennetzwerk oder ein drahtloses Netzwerk zurückgreift, um den Nutzer zu alarmieren und/oder um die Daten an einen entfernten Server oder ein mobiles Gerät zu übertragen, optional verbunden mit Ausgabe eines Alarms in Form von insbesondere einer Text- oder E-Mail-Benachrichtigung oder einer Kombination daraus an den Nutzer, Anzeigen der übermittelten Daten auf einem Endgerät des Nutzers, Ableitung von Optionen einer Behandlung des in der Falle gefangenen Tieres durch den Nutzer, Absenden eines Steuerungsbefehls an das Kommunikations- und Steuerungssystem durch den Nutzer, und Ausführen des Steuerbefehls in der Falle durch das Kommunikations- und Steuerungssystem.

Das Verfahren dient somit zum Betrieb einer automatischen oder mechanischen Falle, und erlaubt die sichere und zweifelsfreie Identifikation des gefangenen Tieres aus der Ferne. Im Fall eines Fehlfanges, d.h. bei Fang eines Individuums einer Tierart, die nicht die Zieltierart für den Fallenfang ist, kann dann ein schnelles Freilassen des Tieres aus der Falle beispielsweise durch fernbedientes Öffnen der Falle erfolgen. Als vorteilhaft erweist sich, dass im Verfahren die Erfassung von Bild- und Videodaten mittels zweier Kameras erfolgt. Diese erlaubt eine zweifelsfreie Identifizierung des Tieres, da die Bild- oder Videoaufnahmen aus mehreren Perspektiven erstellt werden. Selbst im Fall, dass sich ein Tier derart vor der ersten Kamera positioniert hat, dass das Objektiv verdeckt ist oder die Kamera nur einen Ausschnitt des Tieres aufnehmen kann, wird durch die zweite Kamera eine Bild- oder Videoaufnahme aus einer zweiten Perspektive aufgenommen. Dadurch werden weitere Details des Tieres sichtbar, die die zweifelsfreie Identifizierung des Tieres und die Ableitung von Handlungsoptionen ermöglichen. Anhand der Bild- und Videoaufnahmen bzw. deren Auswertung (automatisch oder durch den Nutzer) kann dann die sofortige Freilassung des Tieres, der Verbleib des Tieres in der Falle bis zum Eingriff des Nutzers oder die sofortige Tötung des Tieres in der Falle nach Empfang entsprechender Steuerungsbefehle des Nutzers durchgeführt werden. Im Fall, dass keine automatische, d.h. bild- oder sensorgestützte, sondern eine fernbediente Auslösung bzw. der Verschluss der Falle vorgesehen ist, kann der Nutzer nach Auswertung der verschiedenen Aufnahmen über die Auslösung der Falle entscheiden.

In einer Weiterbildung des erfindungsgemäßen Verfahrens ist vorgesehen, dass der Steuerbefehl ausgewählt ist aus: Erneutes Auslösen der Kameras zur Erfassung weiterer Bild- und Videoaufnahmen. Dies gibt dem Nutzer die Möglichkeit die Identifizierung des Tieres weiter zu verbessern und bestehende Unsicherheiten bei der Bestimmung auszuräumen, bevor über die weiteren Handlungen entschieden wird. Als weiterer Steuerbefehl kommt die Anweisung zum Öffnen der Falle in Frage. Dies insbesondere dann, wenn das gefangene Tier nicht der Zieltierart entspricht oder unter besonderem Schutz steht oder wenn der Fallenfang mit nachfolgendem Freilassen als Mittel zum Vergrämen eines Tieres eingesetzt wird. Als weiterer Steuerbefehl kommt die Anweisung zur Abgabe eines Futtermittels über eine Dispensiervorrichtung oder zur Tötung des gefangenen Tieres durch Abgabe eines Tötungsmittels in die Falle in Frage.

Die automatische Falle ist bevorzugt für den automatisierten, selektiven Fang von Tieren ausgerüstet. Wie eingangs beschrieben, ist die Falle mit verschiedenen Funktionen bzw. Elementen ausgestattet. Hierzu gehören vor allem die beiden Kameras, um visuelle Daten des Tieres zu erfassen und die optionalen Sensoren, um die Anwesenheit eines Tieres im Gehäuse oder in der Nähe der Falle festzustellen.

In eine als günstig angesehenen Weiterbildung der Verfahrens ist vorgesehen, dass ein KI (künstliche Intelligenz)-System die Daten der Kameras und/oder der Sensoren analysiert, um die Art und/oder die Anwesenheit des gefangenen Tieres zu bestimmen.

Das KI-System dient zur Analyse der Daten der Kameras und der optionalen Sensoren, um das Vorhandensein und/oder die Art des gefangenen Tieres zu bestimmen und die Falle entsprechend zu betätigen oder einen Vorschlag für die Behandlung des in der Falle gefangenen Tieres an den Nutzer zu übermitteln. Ein der KI zugeordnetes neuronales Netz dient zur Verbesserung der Genauigkeit und Qualität der Erfassung und der darauf basierenden automatischen Bedienung der Falle ohne Nutzereingriff oder zur Auswahl und Ausgabe von Steuerungsbefehlen oder Vorschlägen für Steuerungsbefehlen an den Nutzer. Der Auslösemechanismus öffnet oder schließt die Fallentür, um ein Tier auf der Grundlage der vom KI-System vorgenommenen Bestimmung einzufangen, d.h. in der Falle zu halten oder freizulassen.

Das KI-System enthält einen maschinellen Lernalgorithmus, und der Lernalgorithmus umfasst ein neuronales Netzwerk, das auf einem Datensatz von (Wild)Tierbildern trainiert wurde. Das neuronale Netzwerk ist in der Lage, verschiedene Arten von Tieren zu erkennen und zu unterscheiden, so dass das System selektiv nur die gewünschte Tierart fangen bzw. nicht erwünschte Tiere selbstständig freilassen kann. Das neuronale Netz verbessert die Genauigkeit und Qualität der Erkennung. Das neuronale Netz wird mit einem Backpropagation-Algorithmus, einem neuronalen Faltungsnetz oder anderen Arten von neuronalen Netzen trainiert. In einer optionalen Weiterbildung der Erfindung kann über die KI auch die Entscheidung getroffen oder vorgeschlagen werden, das in der Falle gefangene Tier zu füttern, zu betäuben oder zu töten.

Zur Dokumentation der Fallenaktivität kann zusätzlich zu den zuvor beschriebenen Funktionen über die Mittel zur Fernüberwachung des Fangs und des Zustands des gefangenen Tieres ein von der KI gesteuertes automatisches Alarmierungssystem vorgesehen werden, das akustische oder visuelle Alarme ausgibt und/oder Text- oder E-Mail-Benachrichtigungen oder eine Kombination davon an den Nutzer zusammen mit den erfassten Sensor- und/oder Bilddaten übermittelt. Der Nutzer kann hieraus dann die Informationen entnehmen, dass die Falle innerhalb eines bestimmten, unter Tierschutzgesichtspunkten relevanten Zeitraums aufgesucht und das dort gefangene Tier aus der Falle entnommen werden muss. Zusätzlich kann auch eine Erinnerungsfunktion vorgesehen werden, die den Nutzer an den Ablauf des obigen Zeitraums erinnert. Die Falle kann dabei bevorzugt derart ausgebildet sein, dass bei Ablauf des vorgenannten Zeitraums eine selbstständige Freilassung des gefangenen Tieres erfolgt, wenn der Nutzer die Falle nicht aufgesucht hat.

Die Erfindung wird nachfolgend anhand eines Ausführungsbeispiels und dazugehöriger Zeichnungen näher erläutert. Es zeigt:
Fig. 1 eine schematische Darstellung einer Ausführungsform der erfindungsgemäßen Falle in perspektivischer Darstellung und
Fig. 2 ein Ablaufdiagramm der automatisierten Verwendung der erfindungsgemäßen Falle.

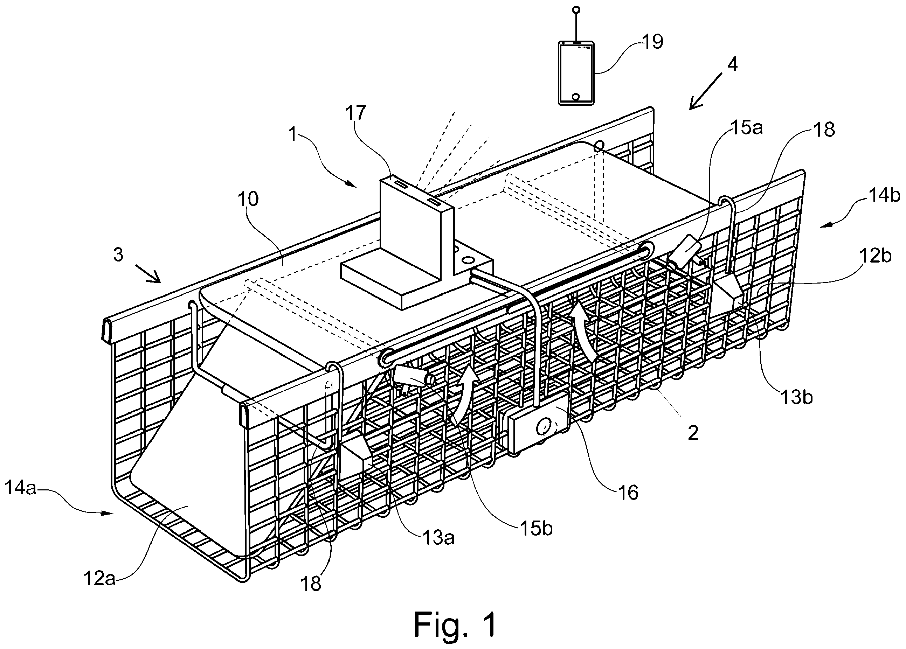

Figur 1 zeigt die automatische Falle 1. Diese umfasst im Ausführungsbeispiel ein Gehäuse 10 mit einem Fallenraum 2 mit zwei Zutrittsöffnungen 11a, b, die mit zwei an gegenüberliegenden Enden 14a, b des Gehäuses vorgesehenen Klappen 12a, b verschließbar ist. Die Erfindung ist nicht auf die Ausführungsform mit die Zugangsöffnung verschließenden Klappen 12 a, b beschränkt. Denkbar und von der Erfindung gleichermaßen umfasst ist hier auch die Verwendung von Türen oder Schwingtüren oder sonstigen geeigneten Verschlussmitteln, die eine Flucht des gefangenen Tieres verhindern. Die Falle 1 des Ausführungsbeispiels weist mehrere Erfassungsmittel auf. Dabei handelt es sich zum einen im Bereich der Klappe 12a, b angeordnete Sensoren 13a, b, wie beispielsweise Infrarotsensoren, Passiv-Infrarot-Sensoren (PIR-Sensoren), Bewegungssensoren oder Wärmesensoren. Die Falle 1 verfügt über zwei Kameras 15a, b, wie beispielsweise Kameras mit Bilderkennungstechnologie, insbesondere Laser-, Wärmebild- oder Nachtsichtkameras, bevorzugt hochauflösende Kameras, die an einer ersten Seite 3 und an einer der ersten Seite 3 gegenüberliegenden zweiten Seite 4 des Fallenraumes 2 angeordnet sind und deren Erfassungs- bzw. Aufzeichnungsbereiche den gesamten Fallenraum 2 abdecken. Die Sensoren 13a, b wie die Kameras 15a, b sind in unterschiedlichen Winkeln und an unterschiedlichen Stellen im Gehäuse 10 angeordnet, um die Wahrscheinlichkeit der Entdeckung eines Tieres und die zweifelsfreie Identifizierung der Tierart zu erhöhen, auch wenn ein Sensor und/oder eine Kamera durch das in die Falle 1 eingetretene Tier verdeckt wird.

Die Falle 1 umfasst in der hier gezeigten Ausführungsform einen nicht gezeigten automatischen Auslösemechanismus, der in der Lage ist, die Falle 1 als Reaktion auf die Erfassung eines Tieres oder fernbedient durch einen Nutzer auszulösen. Der Auslösemechanismus weist einen Aktor auf, der die Arretierung der Klappen 12a, b oder alternativen Verschlussmitteln löst und in die in Figur 1 dargestellte Schließstellung überführt. Darüber hinaus kann der Aktor die Klappen 12a, b auch wieder in eine Offenstellung zurückzuführen und arretieren. Hierdurch wird das in der Falle 1 gefangene Tier freigelassen.

Ein in der Falle 1 vorgesehenes Alarmierungssystem 17 ist in der Lage, einen Benutzer zu alarmieren, wenn ein Tier gefangen ist. Die Falle umfasst auch ein nicht dargestelltes ein Kommunikationssystem, das auf ein Mobilfunknetzwerk, ein Satellitennetzwerk oder ein drahtloses Netzwerk zugreift, um dem Nutzer Daten an einen entfernten Server oder ein mobiles Gerät 19 zu übertragen. Das Kommunikationssystem kann auch zur aktiven Kommunikation, insbesondere mit den Kameras 15a, b dienen, wenn der Nutzer zur weiteren Identifizierung eine Live-Aufschaltung auf die Kameras 15a, b durchführen oder weitere Bilder/Videos aufnehmen möchte.

Um mit der gleichen Falle verschiedene Tiere und Tierarten mit unterschiedlicher Größe detektieren und fangen zu können, sind die Sensoren 13a, b in der Falle 1 an einer am Gehäuse 10 angeordneten Höhenverstellungsvorrichtung 18 angeordnet. Die Höhenverstellungsvorrichtung 18 kann mechanisch, elektronisch oder fernbedienbar verstellt werden. Auch für die Kameras 15a, b kann eine Höhenverstellungsvorrichtung vorgesehen werden.

In der der Falle 1 ist auch eine Dispensiervorrichtung 16 zur Abgabe von Futtermitteln und Lockmitteln angeordnet. Die Abgabe der Futter- und Lockmittel erfolgt dabei in das Gehäuse 1. Kommt es zu Fehlfängen, die automatisch freigelassen werden, kann die Falle 1 fernbedient mit neuem Futter beziehungsweise Lockmitteln bestückt und wieder fängisch gestellt werden, ohne dass der Nutzer die Falle 1 aufsuchen muss. Bei einer vollständig automatisch betriebenen Falle 1, das heißt, Erkennung des gefangenen Tieres und Entscheidung über das Belassen in der Falle 1 oder das Freilassen dieses Tieres wird automatisiert durchgeführt, kann auch das Futter oder Lockmittel automatisiert dispensiert werden beziehungsweise nach dem Freilassen aufgefüllt werden.

Das Gehäuse 10 der Falle 1 besteht im Ausführungsbeispiel aus einem Drahtgeflecht. Denkbar ist selbstverständlich auch die Verwendung lichtundurchlässiger Materialien wie Metall, Kunststoff, Beton oder Holz sowie Kombinationen daraus. Das Gehäuse 10 und die Erfassungsmittel können auch wasserdicht ausgebildet werden, sodass die Falle 1 auch für die Jagd im oder unter Wasser eingesetzt werden kann.

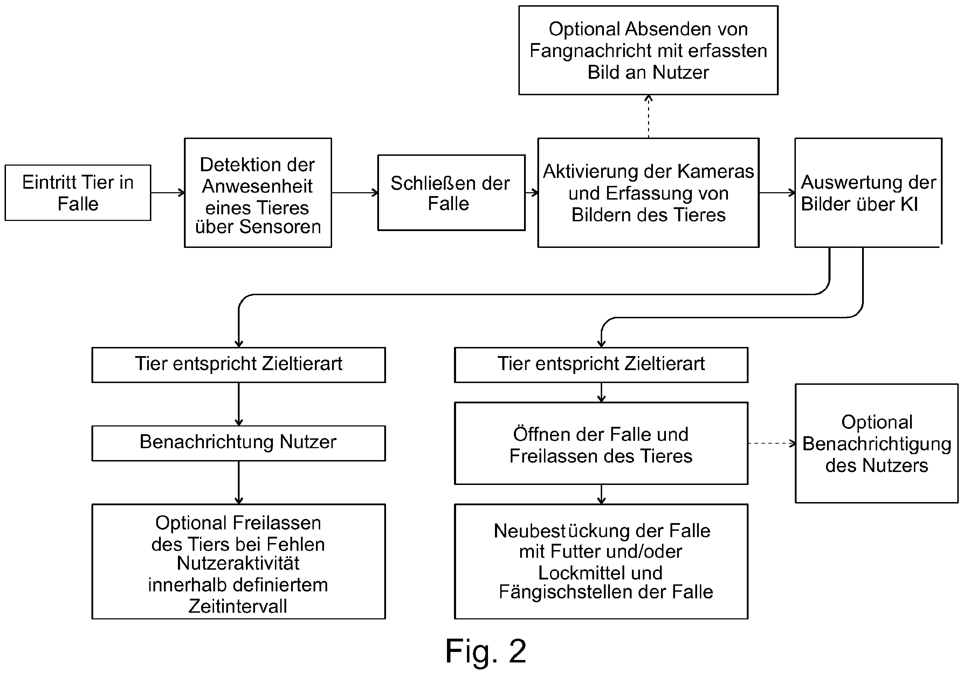

Figur 2 zeigt schematisch eine Ausführungsform eines automatisierten Kl-unterstützten Verfahrens zum Betrieb der erfindungsgemäßen Falle 1. Nach Eintritt eines Tieres in die Falle 1 erfolgt dessen Detektion über Sensoren 13a, b beispielsweise Bewegungs-, Infrarot-, oder Wärmesensoren. Ist die Anwesenheit das Tieres bestätigt, wird die Falle 1 automatisch geschlossen und es erfolgt eine Aktivierung der Kameras 15a, b zur Erfassung eines oder mehrerer Bilder des Tieres aus zwei Perspektiven. Optional kann über das Alarmierungssystem 17 und/oder das Kommunikationssystem eine Fangnachricht mit den erfassten Bildern an den Nutzer abgesendet werden. Dieser erhält die Nachricht z.B. per E-Mail oder Kurznachricht auf seinen Computer oder Mobilgerät und kann anhand der Bilder unmittelbar entscheiden, ob die Falle aufgesucht werden muss oder nicht. Im nächsten Schritt erfolgt eine Auswertung der erfassten Bilder über eine künstliche Intelligenz, wobei durch Vergleich mit gespeicherten Bildern automatisch entschieden wird, ob das gefangene Tier der gewünschten Zieltierart entspricht oder nicht. Entspricht das Tier der Zieltierart, wird über das Alarmierungssystem 17 eine Benachrichtigung an den Nutzer gesendet, sodass dieser darüber informiert ist, dass ein Zieltier gefangen wurde. Gleichzeitig mit Absenden der Nachricht wird optional ein Zeitintervall definiert, innerhalb dessen das Tier aus der Falle 1 entnommen werden muss. Läuft das Zeitintervall ohne Nutzeraktivität ab, kann ein Freilassen des Tieres durch die Falle 1 selbsttätig durch Öffnen der Falle 1 vorgenommen werden.

Stellt sich bei der Auswertung der Bilder heraus, dass das gefangene Tier nicht der Zieltierart entspricht, wird die Falle 1 automatisch geöffnet und das Tier freigelassen. Nach dem Freilassen wird die Falle wieder fängisch gestellt und es erfolgt eine automatisierte Neubestückung der Falle mit Futter und/oder Lockmittel. Optional kann eine Nachricht an den Nutzer über das Alarmierungssystem 17 abgesendet werden, der ihn über die Aktivität der Falle 1 und das erneute Fängischstellen, d.h. die Aktivierung der Falle 1 informiert. Durch Verwendung der erfindungsgemäßen Falle 1 wird vermieden, dass Tiere über einen nicht tierschutzgerechten Zeitraum in der Falle 1 verbleiben müssen. Darüber hinaus kann der Nutzer remote feststellen, ob ein Tier in der Falle 1 gefangen wurde und muss diese nicht aufsuchen. Ein Aufsuchen der Falle erfolgt nur wenn dort das gewünschte Tier gefangen wurde, das dann vom Nutzer entnommen wird.

Bei nicht KI-gestützter Verwendung werden die aus mehreren Perspektiven aufgenommenen Bilder an den Nutzer gesendet und dieser kann dann unmittelbar anhand der Bilder entscheiden, ob das Tier freigelassen, in der Falle belassen oder getötet wird. Um die Identifizierung zu verbessern, kann der Nutzer über das Kommunikationssystem die Kameras 15a, b ansteuern und weitere Aufnahmen oder Videos des Tieres aufzeichnen oder live betrachten und erst nach zweifelsfreier Identifizierung die jeweiligen nachfolgenden Handlungen durchführen.

## Patentansprüche

1. Falle (1) für Wildtiere, insbesondere automatische oder mechanische Falle, umfassend:
- ein Gehäuse (10) mit einem Fallenraum (2), der mindestens eine Zutrittsöffnung (11a, 11b), welche verschließbar ist aufweist,
- wenigstens zwei Kameras (15a, 15b) mit automatischer Bilder- oder / und Videoerfassung;
- einen Auslösemechanismus für die Falle,
- ein Kommunikations- und Steuerungssystem zur Übermittlung von Bild- und/oder Videodaten und zum Empfang von Steuerungsbefehlen, optional mit einem Alarmierungssystem (17), das in der Lage ist, einen Benutzer zu alarmieren, wenn ein Tier gefangen ist, und
- eine Energiequelle zur Versorgung der Falle (1) mit Energie,
wobei die Kameras in unterschiedlichen Winkeln oder an unterschiedlichen Stellen, bevorzugt an einer ersten Seite (3) und einer der ersten Seite (3) gegenüberliegenden zweiten Seite (4) im oder am Fallenraum (2) angeordnet sind und einen den gesamten Fallenraum (2) erfassenden Bildaufzeichnungsbereich aufweisen.

2. Falle (1) nach Anspruch 1, **dadurch gekennzeichnet, dass** die Kameras mit einer Bilderkennungstechnologie, insbesondere als Laser-, Wärmebild- oder Nachtsichtkameras, bevorzugt hochauflösende Kameras oder Kombinationen daraus, ausgebildet sind und wobei bevorzugt eine zeitgleiche oder zeitversetzte automatische Bilderfassung durch die Kameras vorgesehen ist.

3. Falle (1) nach einem der vorhergehenden Ansprüche, **dadurch gekennzeichnet, dass** die Falle (1) wenigstens einen Sensor (13a, 13b), insbesondere Infrarotsensor, Passiv-Infrarot-Sensor (PIR-Sensors), Bewegungssensor oder Wärmesensor oder Kombinationen daraus aufweist.

4. Falle (1) nach einem der vorhergehenden Ansprüche, **dadurch gekennzeichnet, dass** die Kameras und/oder die Sensoren an einer im Gehäuse (10) angeordneten Höhenverstellungsvorrichtung (18) angeordnet sind, wobei die Höhenverstellungsvorrichtung (18) bevorzugt mechanisch, elektronisch oder fernbedienbar verstellbar ist.

5. Falle (1) nach einem der vorhergehenden Ansprüche, **dadurch gekennzeichnet, dass** die Sensoren (13a, 13b) einen einstellbaren Detektionsbereich aufweisen und/oder die Sensoren (13a, 13b) eine höhenverstellbare Lichtschranke oder einen oder mehr höhenverstellbare Bewegungssensor(en) umfassen und/oder der Wärmesensor die Temperatur in der Falle (1) und/oder eine Temperaturänderung kontinuierlich oder in definierten Intervallen erfasst.

6. Falle (1) nach einem der vorhergehenden Ansprüche, **dadurch gekennzeichnet, dass** zusätzlich ein Mittel zur Aufnahme von Tonsignalen an oder in der Falle (1) vorgesehen ist und das automatische Alarmierungssystem (17) zur Übermittlung und/oder Ausgabe von Tonsignale ausgerüstet ist.

7. Falle (1) nach einem der vorhergehenden Ansprüche, **dadurch gekennzeichnet, dass** in dem Fallenraum (2) eine Lichtquelle angeordnet ist, die bevorzugt durch wenigstens ein Erfassungsmittel steuerbar ist und/oder wenigstens einer der Kameras zugeordnet oder in diese integriert ist.

8. Falle (1) nach einem der vorhergehenden Ansprüche, **dadurch gekennzeichnet, dass** dem Auslösemechanismus wenigstens ein Aktor zugeordnet ist, welcher eingerichtet ist, die Arretierung des Verschlussmechanismus, insbesondere der Klappe (12a, 12b) oder Fallentür, zu lösen und in eine Schließstellung zu überführen und/oder den Verschlussmechanismus, z.B. die Klappe (12a, 12b) oder Fallentür, in eine Offenstellung zurückzuführen und zu arretieren.

9. Falle (1) nach einem der vorhergehenden Ansprüche, **dadurch gekennzeichnet, dass** das Gehäuse (10) eine Ausgangsöffnung aufweist, welche mittels einer Ausgangstür oder Ausgangsklappe verschlossen ist, wobei der Auslösemechanismus mit wenigstens einem weiteren Aktor wirkverbunden ist, welcher die Ausgangstür oder Ausgangsklappe automatisch, insbesondere fernbedienbar in die Offenstellung überführt, in welcher die Ausgangsöffnung freigegeben ist.

10. Falle (1) nach einem der vorhergehenden Ansprüche, **dadurch gekennzeichnet, dass** das Kommunikationssystem ein Kommunikationsmittel, wie eine Sendeeinheit umfasst, das auf ein Mobilfunknetzwerk, ein Satellitennetzwerk oder ein drahtloses Netzwerk zurückgreift, um den Nutzer zu alarmieren und/oder um Daten an einen entfernten Server oder ein mobiles Gerät (19) zu übertragen, insbesondere wobei das automatische Alarmierungssystem (17) einen akustischen oder visuellen Alarm ausgibt, insbesondere eine Text- oder E-Mail-Benachrichtigung oder eine Kombination davon, und das Kommunikationssystem eingerichtet ist, die erfassten Sensor- und/oder Bilddaten an den Nutzer zu senden und/oder optional ein Mittel zur Fernüberwachung der Falle (1) und des Zustands des gefangenen Tieres und zur Fernsteuerung der Falle nach Erhalt von Steuerungsbefehlen über das Kommunikationssystem vorgesehen ist.

11. Falle (1) nach einem der vorhergehenden Ansprüche, **dadurch gekennzeichnet, dass** der Falle (1) wenigstens eine Dispensiervorrichtung (16) zur Abgabe von wahlweise festen oder flüssigen Futtermitteln, festen, flüssigen oder gasförmigen Lockmitteln und/oder letalen oder betäubenden Substanzen, insbesondere in gasförmiger, fester oder flüssiger Form oder Kombinationen daraus zugeordnet ist, wobei die Abgabe in das Gehäuse (10) und/oder in ein Gehäuseumfeld vorgesehen ist und wobei die Dispensiervorrichtung (16) bevorzugt im oder am Gehäuse (10) angeordnet ist und/oder im oder am Gehäuse (10) eine separate Dispensiervorrichtung (16) zur Abgabe von letalen oder betäubenden Substanzen, insbesondere in gasförmiger, fester oder flüssiger Form, vorgesehen ist.

12. Falle (1) nach einem der vorhergehenden Ansprüche, **dadurch gekennzeichnet, dass** das Gehäuse (10) größenverstellbar ausgebildet ist und insbesondere schieb- oder steckbare Einrichtungen zur Veränderung der Gehäusegröße, insbesondere der Gehäusebreite, - höhe oder - länge vorgesehen sind und/oder insbesondere der Ausgangsöffnung nachgeordnet ein entnehmbares Gebinde, insbesondere ein Korb , eine Tasche oder eine Kiste vorgesehen ist, in das ein in der Falle (1) gefangenes Tier durch die Ausgangstür oder Ausgangsklappe austreten kann, nachdem die Ausgangstür oder Ausgangsklappe automatisch oder fernbedient betätigt wurde, wobei die Ausgangsöffnung nach Eintritt des Tiers in das Gebinde automatisch oder fernbedient wiederverschließbar ist, wobei im Gebinde bevorzugt wenigstens ein zusätzliches Erfassungsmittel, insbesondere wenigstens eine weitere Kamera oder wenigstens ein weiterer Sensor zur Erfassung des in das Gebinde eingetretenen Tieres vorgesehen ist.

13. Verfahren zum Betrieb einer Falle nach einem der Ansprüche 1 bis 13 umfassend die Schritte:
- Erfassen des Eintritts eines Tieres in den Fallenraum (2) anhand von Sensor- oder Kameradaten,
- Auslösen der Falle und Verschließen der Zutrittsöffnung (12a, 12b),
- automatische Aufnahme von Bildern und/oder Videos des gefangenen Tieres bevorzugt aus zwei Perspektiven durch die Kameras (15a, 15b) und optionale Erfassung von fallen- oder tierbezogenen Sensordaten;
- Weiterleitung der erfassten Sensor- und/oder Bilddaten an den Nutzer über das Kommunikations- und Steuerungssystem, das auf ein Mobilfunknetzwerk, ein Satellitennetzwerk oder ein drahtloses Netzwerk zurückgreift, um den Nutzer zu alarmieren und/oder um die Daten an einen entfernten Server oder ein mobiles Gerät (19) zu übertragen, optional verbunden mit Ausgabe eines Alarms in Form von insbesondere einer Text- oder E-Mail-Benachrichtigung oder einer Kombination daraus an den Nutzer,
- Anzeigen der übermittelten Daten auf einem Endgerät des Nutzers,
- Ableitung von Optionen einer Behandlung des in der Falle gefangenen Tieres durch den Nutzer,
- Absenden eines Steuerungsbefehls an das Kommunikations- und Steuerungssystem durch den Nutzer, und
- Ausführen des Steuerbefehls in der Falle durch das Kommunikations- und Steuerungssystem.

14. Verfahren nach Anspruch 13, **dadurch gekennzeichnet, dass** der Steuerbefehl ausgewählt ist aus:
- Erneutes Auslösen der Kameras zur Erfassung weiterer Bild- und Videoaufnahmen,
- Öffnen der Falle,
- Abgabe eines Futter- oder Tötungsmittels in die Falle.

15. Verfahren nach einem der Ansprüche 13 oder 14, **dadurch gekennzeichnet, dass** ein KI-System zum Analysieren der Daten der Kameras und/oder der Sensoren, um die Anwesenheit und/oder die Art des Tieres zu bestimmen und ein neuronales Netzwerk zur Verbesserung der Genauigkeit und Qualität der Erkennung vorgesehen ist und die Auswahl und Ausgabe von Steuerbefehlen auf der Grundlage der von dem KI-System getroffenen Feststellung erfolgt oder erfolgen kann, wobei das KI-System bevorzugt einen maschinellen Lernalgorithmus umfasst und der der Lernalgorithmus bevorzugt ein neuronales Netzwerk umfasst, und das neuronale Netzwerk auf einen Datensatz von Bildern von Tieren trainiert wird.
